**Europäisches Patentamt**

**European Patent Office**

**Office européen des brevets**

(19)

(11) Veröffentlichungsnummer: **0 637 750 A2**

## (12) EUROPÄISCHE PATENTANMELDUNG

(21) Anmeldenummer: **94111919.0**

(22) Anmeldetag: **30.07.94**

(51) Int. Cl.⁶: $G01N$ **35/02**, $B01L$ 3/00

(30) Priorität: **05.08.93 DE 4326342**

(43) Veröffentlichungstag der Anmeldung:
**08.02.95 Patentblatt 95/06**

(84) Benannte Vertragsstaaten:
**DE ES FR GB IT**

(71) Anmelder: **BOEHRINGER MANNHEIM GMBH**

**D-68298 Mannheim (DE)**

(72) Erfinder: **Mann, Karl-Heinz**
**Tassiloring 26**

**D-82362 Weilheim (DE)**
Erfinder: **Lang, Alfred**
**Dorfstrasse 9**
**D-82386 Oberhausen (DE)**
Erfinder: **Nowak, Ernst**
**Angermaierstrasse 3A**
**D-82362 Weilheim (DE)**
Erfinder: **Sattler, Stephan**
**Hans-Böckler-Strasse 13**
**D-82380 Peissenberg (DE)**
Erfinder: **Schels, Hans, Dr.**
**Behamstrasse 21**
**D-80687 München (DE)**

(54) **Verfahren zur Analyse von Probenflüssigkeiten.**

(57) Die Erfindung betrifft ein Verfahren zur Analyse von Probenflüssigkeiten, bei dem Daten hoher Informationsdichte auf Gefäßen mit Reagenzlösungen angebracht sind, die zur Durchführung und Steuerung der Analyse dienen. Weiterhin betrifft die Erfindung ein Verfahren zur Herstellung von mit Codeträgern versehenen Reagenzgefäßen und ein System zur Analyse von Probenflüssigkeiten, in dem mit Codeträgern versehene Reagenzgefäße Verwendung finden.

Ein erfindungsgemäßes Verfahren kann bevorzugt in klinischen Analysenapparaturen Verwendung finden, da mit Codeträgern hoher Informationsdichte versehene Reagenzgefäße den Analysenablauf rationalisieren.

FIG. 4

EP 0 637 750 A2

Die Erfindung betrifft ein Verfahren zur Analyse von Probenflüssigkeiten, bei dem Datenträger hoher Informationsdichteauf Gefäßen mit Reagenzlösungen angebracht sind, die zur Durchführung und Steuerung der Analyse dienen. Weiterhin betrifft die Erfindung ein Verfahren zur Herstellung von mit Datenträgern versehenen Reagenzgefäßen und ein System zur Analyse von Probenflüssigkeiten, in dem mit Codeträgern versehene Reagenzgefäße Verwendung finden.

In der Patentanmeldung WO 89/08264 wird ein Verfahren zur automatischen, vollselektiven Analyse von Blut oder seinen Bestandteilen beschrieben. Das Verfahren basiert darauf, daß an einem Probengefäß Daten des Patienten und der Probe in Form eines batterielosen, elektronischen Codeträgers befestigt werden. Durch diese Kombination aus Datenträger und Probengefäß wird eine Zuordnung der Probe zu einem Patienten während des gesamten Analyseprozesses möglich. Das Patent US-4,975,647 offenbart die Verwendung von Reagenzgefäßen, die mit einer Identifikationsvorrichtung verbunden sind. Die Identifikationsvorrichtung enthält ein PROM (programmable read-only memory), in dem Daten, betreffend die Reagenzflüssigkeiten, gespeichert sind. Genannte Identifikationsvorrichtungen werden mit einem Analysengerät über elektromechanische Kontakte verbunden.

Bei bisherigen Analysesystemen ist es ebenfalls bekannt, Gefäße für Reagenzlösungen mit einem eindimensionalen Strichcode zu versehen, der z. B. den Reagenztyp und eine Chargennummer enthält.

Bisherige Analyseverfahren besitzen jedoch den Nachteil, daß die Datenmenge, die mit Strichcodes auf Reagenzgefäßen gespeichert werden kann, begrenzt ist, so daß eine Steuerung des Analyseprozesses oder mit der Analyse verbundener Prozesse, wie z. B. Mischen und Verdünnen, nicht mit diesen Daten möglich ist. Der Benutzer eines Analyseautomaten muß daher ein bestimmtes Analyseprogramm aufrufen, das die Steuerung des Prozesses übernimmt und dafür Sorge tragen, daß sich geeignete Reagenzgefäße im Automaten befinden. Ein weiterer Nachteil ist, daß bei Einführung einer neuartigen Analyse das Analysensteuerprogramm durch einen Software-Update oder eine umfangreiche manuelle Dateneingabe erweitert werden muß. Die Eingabe von Konzentrationswerten zur Kalibrierung erfolgt in einem gesonderten Arbeitsschritt durch manuelle Dateneingabe oder Lesen von Strichcodes mit einem Handleser.

Bei Verwendung von Identifikationsvorrichtungen nach Patent US-4,975,647 können die im PROM gespeicherten Daten zwar zur Steuerung der Analyse dienen, jedoch ist die Herstellung einer elektromechanischen Verbindung von Identifikationsvorrichtung und Analysengerät für den Anwender unbequem und zudem fehleranfällig. Außerdem steht der relativ aufwendige und teure Aufbau der Identifikationsvorrichtung einer Einmalverwendung entgegen.

Der Erfindung lag daher die Aufgabe zugrunde, ein Verfahren und ein System zur Verfügung zu stellen, das Reagenzgefäße beinhaltet, die kontaktlose Datenträger besitzen, die eine Steuerung des Analyseprozesses ermöglichen und in ihrem Aufbau so einfach und kostengünstig sind, daß sie gegebenenfalls nach der Analyse verworfen werden können. Es war weiterhin Aufgabe der Erfindung, Datenträger vorzuschlagen, deren Datenmenge so groß ist, daß auch Steuerungsprogramme für Analyseautomaten gespeichert werden können.

Die Erfindung beinhaltet demgemäß ein Verfahren zur Analyse von Probenflüssigkeiten mit den Schritten

- kontaktloses Einlesen von Daten hoher Informationsdichte aus einem Datenträger, der sich an einem Gefäß befindet, das eine Reagenzlösung enthält,
- Durchführung einer Analyse unter Verwendung der eingelesenen Daten, die zur Steuerung der Analyse beitragen unter Verwendung der in dem Gefäß befindlichen Reagenzlösung.

Ebenfalls gehört ein Verfahren zur Herstellung eines mit einem Datenträger versehenen Reagenzgefäßes zu der Erfindung, bei dem direkt nach der Befüllung Daten mit hoher Informationsdichte angebracht werden.

Auch ein System zur Analyse von Probenflüssigkeiten gehört zur Erfindung, das folgende Komponenten beinhaltet:

- ein Lesegerät für Daten,
- eine Analysevorrichtung,
- ein oder mehrere Gefäße, enthaltend Reagenzlösung mit Datenträgern, auf denen Daten hoher Informationsdichte gespeichert sind, die zur Steuerung der Analysevorrichtung dienen.

Ein erfindungsgemäßes System enthält eine Analysevorrichtung. Im Stand der Technik sind zahlreiche Analysevorrichtungen beschrieben worden (z. B. DE-OS 3839080, EP-0078948, EP-0216026). Eine Analysevorrichtung im Sinne der Erfindung besitzt eine Anordnung von Proben, die analysiert werden sollen, eine Anordnung zur Aufnahme von Reagenzgefäßen und eine Vorrichtung zur Pipettierung von Flüssigkeiten. Analysevorrichtungen besitzen ebenfalls eine Meßvorrichtung, die in vielen Fällen durch einen Photometer gegeben ist, jedoch auch durch andere im Stand der Technik bekannte Vorrichtungen, wie z. B. Leitfähigkeitsmeßzellen, potentiometrische Meßzellen usw. repräsentiert sein kann. Die Signale der Meßzelle werden mit einer Recheneinheit ausgewertet und auf einem Display dargestellt und/oder ausgedruckt.

Ein erfindungsgemäßes System beinhaltet weiterhin ein oder mehrere Lesegeräte für Daten. Neben manuellen Eingabevorrichtungen besitzen größere Analysevorrichtungen häufig Lesegeräte für Strichcodes, Magnetstreifen oder Chipkarten. Bewährt haben sich beispielsweise Strichcode-Lesegeräte, die auf Proben oder/und Reagenzienbehältern angebrachte Daten lesen. Die im Stand der Technik für diesen Zweck verwendeten eindimensionalen Strichcodes haben eine Speicherkapazität von wenigen Bytes. Aus diesem Grunde können nur relativ wenige Daten, wie z. B. Haltbarkeitsdatum, Chargennummer sowie Kennzahlen für Gefäßinhalt und Flaschengröße gespeichert werden. Für die Zuordnung dieser Kennzahlen muß auf eine bereits in der Analysenvorrichtung vorhandene Datenbank zugegriffen werden. Erfindungsgemäß wird die Speicherkapazität durch eine bevorzugte Verwendung von zweidimensionalen Strichcodes oder besonders bevorzugt durch die Verwendung von kontaktlosen Chipkarten erhöht.

Von besonderem Vorteil ist die Verwendung von Strichcodes oder kontaktlosen Chipkarten, da ein Einlesen erfolgen kann, ohne daß elektrische Kontakte geschlossen werden müssen, oder eine Berührung stattfindet. Es entfallen daher sowohl Bedienungsfehler, z. B. Verpolung, als auch mechanische Probleme, wie z. B. instabile Kontakte oder Verschleiß und Verschmutzung bei Magnetkartenlesern. Die genannten Datenträger besitzen ebenfalls den Vorteil, daß sie preisgünstig herstellbar sind und wenig Abfall erzeugen, so daß eine Einmalverwendung möglich wird. Viele Reagenzgefäße werden lediglich einmal verwendet, da ihre Reinigung zu aufwendig wäre. Auch in diesen Fällen ist eine feste Verbindung von zweidimensionalen Strichcodes oder kontaktlosen Chipkarten mit dem Reagenzgefäß aufgrund der niedrigen Kosten möglich.

Eine vergrößerte Speicherkapazität ermöglicht die Speicherung von Prozeßabläufen auf Reagenzgefäßen, ohne daß ein weiterer Zugriff auf eine im Analysensystem vorhandene Datenbank erforderlich ist. Besonders vorteilhaft ist es, wenn mit einer Analysevorrichtung eine möglichst große Zahl von unterschiedlichen Analysen durchgeführt werden kann. Dies setzt voraus, daß die Analysevorrichtung in der Lage ist, je nach Analyse unterschiedliche Prozeßabläufe durchzuführen. Beispielsweise können Abläufe, wie Verdünnen eines Reagenzes, Mischung von Reagenzien und das Einhalten von Inkubationszeiten, notwendig werden.

Die auf den Datenträgern gespeicherten Prozeßabläufe können sich dabei auf Einheiten übergeordneter Prozesse beziehen, die ihrerseits aus einer Vielzahl von Einzelprozessen bestehen. Beispielsweise könnte ein übergeordneter Prozeß "Pipettierung" Verfahrensschritte beinhalten, die die Pipette über ein Reagenzgefäß bewegen, sie in die Flüssigkeit eintauchen, Flüssigkeit einer bestimmten Menge in sie einziehen usw.

Es ist unter Umständen notwendig, genannte Prozesse weiter zu zerlegen und gegebenenfalls Informationen, die von Sensoren des Systems zur Analyse erhalten werden, mit in die Steuerung einzubeziehen. Die Zusammenfassung von Prozessen zu übergeordneten Prozessen führt zu einer Modularisierung, mit der eine kompaktere Steuerung der Analyse erreicht werden kann.

Datenträger hoher Informationsdichte können die genannten Prozeßabläufe speichern. Ein erfindungsgemäßes System kann daher Daten einlesen, die auf einem Reagenzgefäß gespeichert sind und Anweisungen für Prozeßabläufe enthalten. Die ausführbaren Prozesse können somit optimal auf das jeweilige Reagenz abgestimmt werden.

Die Verwendung von Datenträgern hoher Informationsdichte, wie zweidimensionalen Strichcodes oder kontaktlosen Chipkarten, macht es ebenfalls möglich, Daten abzuspeichern, die für die Konzentration und Zusammensetzung eines Reagenz charakteristisch sind. Dies ermöglicht es, auch bei produktionsmäßig schwankenden Reagenzkonzentrationen oder Zusammensetzungen eine exakte Analyse unter Einbeziehung dieser Daten durchzuführen.

Mit den auf Datenträgern hoher Informationsdichte ist ebenfalls eine Vorbereitung des Analysesystems auf die jeweilige Messung und eine Kalibrierung möglich. Auf dem Datenträger kann beispielsweise die Wellenlänge der Strahlung abgespeichert sein, bei der die Analyse durchgeführt werden soll oder es kann der Empfindlichkeitsbereich gespeichert sein, mit der die Messung durchgeführt werden soll. Eine Kalibrierung der Analysevorrichtung kann beispielsweise erfolgen, indem von dem Datenträger Informationen abgelesen werden, die eine Relation von Meßsignal und Konzentration an Analyten betreffen.

Vorteilhaft kann ebenfalls eine Kombination von Reagenzgefäßen mit Datenträgern hoher Informationsdichte und Reagenzgefäßen mit herkömmlichen Strichcodes erfolgen. Reagenzgefäße mit Strichcodes werden dazu Reagenzgefäßen mit Datenträgern hoher Informationsdichte zugeordnet. Informationen aus Datenträgern hoher Informationsdichte können somit ebenfalls Verwendung für die Reagenzgefäße mit Strichcodes finden.

Als Datenträger hoher Informationsdichte werden bevorzugt zweidimensionale Strichcodes eingesetzt. Diese sind bereits im Stand der Technik bekannt und werden von der Firma Symbol Technologies unter der Verfahrensbezeichnung PDF 417 gefertigt. Die erreichbare Informationsdichte beträgt etwa 480 ASCII-Zeichen pro inch$^2$.

Im Rahmen der Erfindung besonders bevorzugte Datenträger sind kontaktlose Chipkarten. Diese enthalten eine Sende-/Empfangsspule, die von einem räumlich getrennten elektromagnetischen Sender angesteuert wird. Es wird bei diesem Prozeß sowohl die elektrische Energie zum Betrieb des Chips übertragen als auch Impulse, die Rechen- und Speichervorgänge im Chip in Gang setzen. Kontaktlose Chipkarten sind auf dem Markt z. B. von Philips unter der Bezeichnung V7930 erhältlich.

Mit kontaktlosen Chipkarten sind neben den allgemein für zweidimensionale Strichcodes genannten erfindungsgemäßen Anwendungen außerdem Anwendungen möglich, bei denen während der Reagenzherstellung oder von der Analysevorrichtung zusätzlich Daten abgespeichert werden oder bereits vorhandene Daten abgeändert werden.

Dies ermöglicht Herstellungprozesse, die es erlauben, jeden Herstellungsschritt maschinenlesbar am Reagenz zu protokollieren und dessen Einzelbestandteile zu identifizieren. Dies stellt eine wesentliche Verbesserung der Sicherheit und Qualität zu den gebräuchlichen Begleitzetteln dar.

Werden die Kalibrations- und Kontrollösungen später als das Reagenz produziert, so können die Kennwerte der Konzentration auch nachträglich auf dem Reagenzbehälter gespeichert werden.

Da die Reagenzien einwandfrei durch einen kontaktlosen Chip identifizierbar sind, kann die Aufbringung des Etiketts erst unmittelbar vor der Auslieferung erfolgen, d. h. Erweiterungen des Dateninhalts, z. B. Verlängerung des Verfalldatums, sind bis dahin möglich.

Bei Einsatz flexibler Fertigungsanlagen kann deren Steuerung durch entsprechende Datenvorgabe des Chips an der noch ungefüllten Reagenzflasche erfolgen.

Ebenfalls ist es möglich, den Zeitpunkt der ersten Entnahme und die Anzahl der Entnahmen von Reagenzflüssigkeit aus dem Reagenzgefäß abzuspeichern, so daß es für die Analysevorrichtung möglich ist, die Verwendungszeit des Reagenzes in geöffnetem Zustand und ebenfalls die Seriennummer des oder der Analysensysteme, auf denen das Reagenz verwendet wurde, zu speichern. Für Reagenzbehälter, die zwecks Entsorgung an den Hersteller zurückgehen, kann die Verwendungshistorie ermittelt werden.

Gegebenenfalls ist die Wiederverwendung der Datenträger von zurückgegebenen Reagenzbehältern möglich, aufgrund des einfachen und preisgünstigen Aufbaues von kontaktlosen Chips ist jedoch auch eine einmalige Verwendung möglich. Zum Nachweis der Reagenzqualität können jederzeit alle Einwirkungen, die das Reagenz während Produktion und Anwendung erfahren hat, kontrolliert werden.

Sollen die Vorteile der Abspeicherung von Daten durch die Analysevorrichtung genutzt werden, so muß das System zur Analyse von Flüssigkeiten eine Schreibvorrrichtung besitzen, die den kontaktlosen Chip ansteuern kann. Schreib- und Lesevorrichtungen für kontaktlose Chips sind ebenfalls von der Firma Philips zu beziehen.

Die beschriebenen Datenträger hoher Informationsdichte können an die jeweiligen Reagenzgefäße angeklebt werden, im Fall von Strichcodes direkt aufgedruckt werden, eingeschweißt oder angeklemmt werden oder sich im Falle von kontaktlosen Chips auch innerhalb des Reagenzgefäßes befinden.

**Beispiel eines Analysenablaufs für TSH in Blut**

Der nachfolgende Ablauf bezieht sich auf den immunologischen Test "TSH". Die Vorgehensweisen in Klinikstation und klinischchemischem Laboratorium sind nur beispielhaft dargestellt, da sie sehr stark von den Gegebenheiten der jeweiligen Klinik abhängen.

**Klinikstation und klinischchemisches Laboratorium:**

1) Anamnese des behandelnden Arztes mit Angabe, welche Diagnosen durchzuführen sind
2) Gewünschte Tests auf Anforderungsbogen markieren
3) Strichcode mit Patientennummer von Anforderungsbogen abziehen und auf Primärgefäß aufkleben
4) Blutabnahme der Proben in Primärgefäße durchführen
5) Primärgefäße zentrifugieren

**Klinik-Host-Rechner:**

6) Gewünschte Tests mit Formularleser von Anforderungsbogen lesen
7) Down-Load der Test-Anforderungen vom Host-Rechner zum Steuerrechner des Analysensystems

**Analysensystem:**

8) Download von Probennummern und Testanförderungen führt zu folgender Tabelle im Steuerrechner:

|  | *Zahlenbeispiel* |
|---|---|
| - Probennummer 1<br>- Anforderungen | *nnnnnnnnn*<br>*TSH*<br>*Test x*<br>*Test y*<br>*etc.* |
| - Probennummer 2<br>- Anforderungen | *xxxxxxxxx*<br>*Test z*<br>*etc.* |
| - etc | |

9) Anforderungen an den Benutzer:

| a) benötigte Reagenzien plazieren<br>b) benötigte Proben plazieren<br>c) ggf. benötigte Kalibratoren und Kontrollseren plazieren | *TSH*<br>*nnnnnnnnn* |
|---|---|

10) Lesen der Reagenzdaten vom Chip und Speicherung aller Daten:

a) Packungsdaten:

| | |
|---|---|
| - Packungschargennummer | *164278-11* |
| - Chargennummer Reagenz 1 | *159275-10* |
| - Chargennummer Reagenz 2 | *159276-10* |
| - Chargennummer Reagenz 3 | *159277-10* |
| - Laufzeit Reagenz 1, 2, 3 | *1.10.94* |
| - Verwendungszeit geöffnetes Reagenz 1, 2, 3 | nn |
| - Chargennummer Kalibrator 1 | *175927-10* |
| - Sollwert Kalibrator 1 | *1.35* |
| - Chargennummer Kalibrator 2 | *164892-10* |
| - Sollwert Kalibrator 2 | *2.71* |
| - Chargennummer Kalibrator 3 | *173223-10* |
| - Sollwert Kalibrator 3 | *4.57* |
| - Chargennummer Kalibrator 4 | *191789-01* |
| - Sollwert Kalibrator 4 | *8.60* |
| - Chargennummer Kalibrator 5 | *177456-01* |
| - Sollwert Kalibrator 5 | *13.9* |
| - Laufzeit Kalibrator 1 - 5 | *1.1094* |
| - Verwendungszeit geöffneter Kalibrator 1 - 5 | *30 Tage* |
| - Maximalzeit zwischen 2 Kalibrationen | 5 Tage |
| - Minimalkonzentration | *0.05* |
| - Maximalkonzentration | *30* |
| - Chargennummer Kontrollserum 1 | *123763-11* |
| - Sollwert Kontrollserum 1 | *1.70* |
| - unterer Vertauensbereich Kontrollserum 1 | *0.33* |
| - oberer Vertauensbereich Kontrollserum 1 | *0.35* |
| - Laufzeit Kontrollserum 1 | *1.1.95* |
| - Verwendungszeit geöffnetes Kontrollserum 1 | nn |
| - Chargennummer Kontrollserum 2 | *124529-11* |
| - Sollwert Kontrollserum 2 | *10.7* |
| - unterer Vertrauensbereich Kontrollserum 2 | *1.9* |
| - oberer Vertrauensbereich Kontrollserum 2 | *1.9* |
| - Laufzeit Kontrollserum 2 | *1.3.95* |
| - Verwendungszeit geöffnetes Kontrollserum 2 | nn |

b) Applikationsdaten zur Geräteeinstellung

| | |
|---|---|
| - Ablaufart | *P-WS-F* |
| - Inkubationstemperatur | *37C* |
| - Konzentrationseinheit | *μU/ml* |
| - Inkubationszeit 1 | *60 min* |
| - Inkubationszeit 2 | *30 min* |
| - Inkubationszeit 3 | *5 min* |
| - Waschintensität | *6* |
| - Nachspülvolumen | *0 ml* |
| - Pipettiervolumen Probe | *100 μl* |
| - Pipettiervolumen Standard | *100 μl* |
| - Pipettiervolumen Reagenz 1 | *1000 μl* |
| - Pipettiervolumen Reagenz 2 | *1000 μl* |
| - Pipettiervolumen Reagenz 3 | *800 μl* |

c) Applikationsdaten zur Auswertung und Darstellung

| | |
|---|---|
| - Blankart | *Wasser* |
| - Auswertung | Verfahren 1 |
| - Wichtung | *ohne* |
| - Kritische Extinktion | *2.0* |
| - Steigung | *+* |
| - Kurvendarstellung | *linear* |
| - Konzentrationsachse | *40* |
| - Extinktionsachse | *3.0* |
| - Normbereich Untergrenze | *0.25* |
| - Normbereich Obergrenze | *3.1* |

d) Schreib/-Lesespeicher des Reagenzchips für prozeßvariable
Daten

| | |
|---|---|
| - Öffnungsdatum Reagenzien | *2.4.93* |
| - Öffnungsdatum Kalibratoren | *2.4.93* |
| - Öffnungsdatum Kontrollserum 1 | *25.3.93* |
| - Öffnungsdatum Kontrollserum 2 | *25.3.93* |
| - Zeitpunkt der letzten Kalibration | *1.4.93* |
| - Istvolumen Reagenzien | *100 ml* |
| - Istvolumen Kalibratoren | *2.0 ml* |
| - Istvolumen Kontrollsera | *3.0 ml* |
| - Kennummern für Analysensysteme, auf denen das vorliegende Reagenz Verwendung fand | *S.Nr. 23456* *S.Nr. 45321* *S.Nr. xxxxx* |
| - Benutzer, die das vorliegende Reagenz verwendeten | *Meier* *Müller* *Schulze* nn |
| - Hinweise, die vor einer Weiterbenutzung des Reagenzes warnen oder ggf. diese sogar verhindern | *diverse* |

11) Lesen der Strichcode-Nummern von Proben. Kalibratoren und Kontrollen, sowie ggf. weiteren Reagenzien

| | |
|---|---|
| - Patientennummer Probe | *nnnnnnnnnn* |
| - Chargennummer Kalibrator 1 | *159275−10* |
| - Chargennummer Kalibrator 2 | *164892−10* |
| - Chargennummer Kalibrator 3 | *173223−10* |
| - Chargennummer Kalibrator 4 | *191789−01* |
| - Chargennummer Kalibrator 5 | *177456−01* |
| - Chargennummer Kontrollserum 1 | *123763−11* |
| - Chargennummer Kontrollserum 2 | *124529−11* |
| - Chargennummer Reagenz 2 | *159276−10* |
| - Chargennummer Reagenz 3 | *159277−10* |

12) Durchführung diverser Prüfungen:
a) sind alle benötigten Proben vorhanden
b) sind alle benötigten Reagenzien vorhanden
c) sind sie noch verwendbar (Laufzeit, Öffnungszeit, Volumina, Warnhinweise)

d) ist für den vorliegenden Test eine Systemkalibration nötig, d.h. wie lang liegt die letzte Kalibration zurück, wurde sie auf dem vorliegenden Analysensystem durchgeführt

e) Ist eine Kalibration durchführbar. d.h. sind die Kalibratoren vorhanden, sind sie noch verwendbar (Laufzeit, Öffnungszeit, Volumina)

f) sind die benötigten Kontrollseren für die Qualitätskontrolle der Ergebnisse vorhanden

g) sind die Kontrollseren noch verwendbar (Laufzeit, Öffnungszeit, Volumina)

13) Durchführung des Ablaufs des Analysengeräts entsprechend den in 10) und 11) gelesenen Parametern

14) Ggf. Durchführung der Kalibration und Ausdruck der Kalibrationskurve unter Angabe der verwendeten Kalibratoren und Reagenzien und ggf. Warnhinweisen

15) Abarbeitung des Tests entsprechend den Anforderungen

16) Errechnung der Konzentrationsdaten entsprechend Rechenvorschrift mit Hilfe der Kalibrationsdaten und der Applikationsdaten zur Auswertung und Darstellung

17) Ausdruck der gewonnenen Ergebnisse mit Angabe der verwendeten Reagenzien und Kalibratoren, sowie von Warnhinweisen (z.B. zulässige Grenzen überschritten, Normalwerte nicht eingehalten etc.)

18) Übertragung der Konzentrationsergebnisse verknüpft mit Probennummer und Testanforderung an den Host-Rechner.

19) Ggf. Durchführung einer Systemkontrolle mittels Kontrollsera und Ausdruck der Ergebnisse unter Angabe der verwendeten Reagenzien und Warnhinweisen, sowie von System und Benutzer

Konkrete Ausführungsformen erfindungsgemäßer Reagenzgefäße bzw. eines erfindungsgemäßen Analysesystems sind in den Figuren 1 bis 4 dargestellt.

Figur 1:    Reagenzgefäß mit zweidimensionalem Strichcode
Figur 2:    Reagenzgefäß mit kontaktloser Chipkarte
Figur 3:    Reagenzgefäß mit eingekapselter kontaktloser Chipkarte
Figur 4:    System zur Analyse von Probenflüssigkeiten.

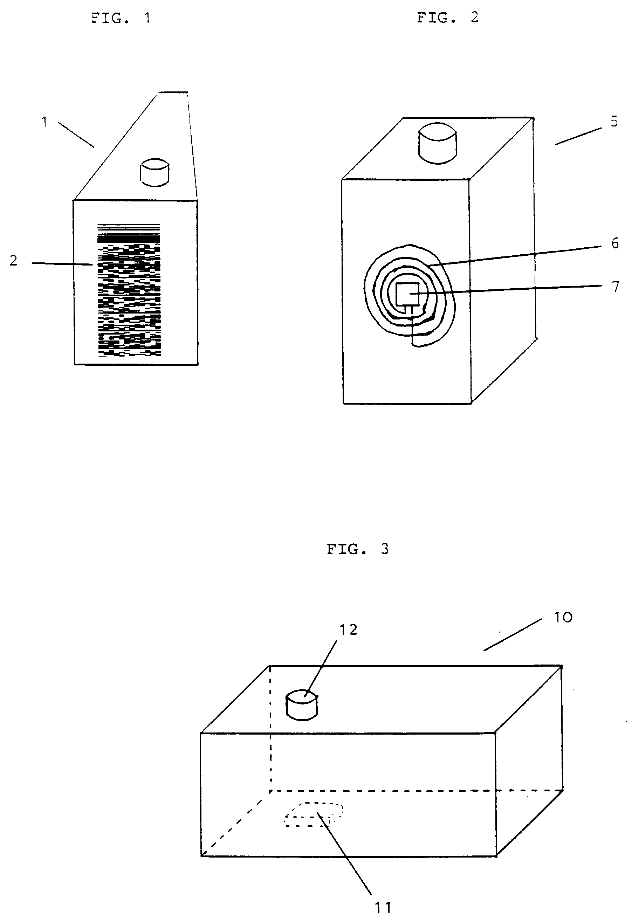

Figur 1 zeigt ein Reagenzgefäß (1) aus Polyethylen, auf dem an einer Seite ein zweidimensionaler Strichcode (2) aufgeklebt ist. Der Strichcode kann beim Einstellen des Reagenzgefäßes (1) in eine Analysevorrichtung gelesen werden. Es kann dabei die Bewegung des Reagenzgefäßes beim Einschieben in eine vorgesehene Position genutzt werden, um den Leseprozeß zu ermöglichen. Es sind jedoch auch Lesegeräte bekannt, die einen Leseprozeß ohne Relativbewegung von Lesevorrichtung und Strichcode ermöglichen.

Figur 2 zeigt ein Reagenzgefäß (5), bei dem eine kontaktlose Chipkarte, beinhaltend eine Sende-/Empfangsspule (6) und einen Chip (7), auf eine der Stirnseiten des Reagenzgefäßes aufgeklebt ist.

In Figur 3 ist ein Reagenzgefäß (10) dargestellt, in dessen Innerem sich eine eingekapselte kontaktlose Chipkarte (11) befindet. Die Einkapselung der Chipkarte, welche aus Glas besteht, ist gegenüber gebräuchlichen Reagenzlösungen in der klinischen Analyse inert. Eingekapselte kontaktlose Chipkarten können beim Herstellungsprozeß oder der Füllung des Reagenzgefäßes (10) durch eine Öffnung (12) in das Reagenzgefäß gegeben werden. Dies bietet den Vorteil, daß eine Befestigung der Chipkarte am Reagenzgefäß entfallen kann. In der Technik sind Sender erhältlich, die eine ausreichende Sendestärke besitzen, mit der die Chipkarte auch im Inneren des Reagenzgefäßes angesteuert werden kann.

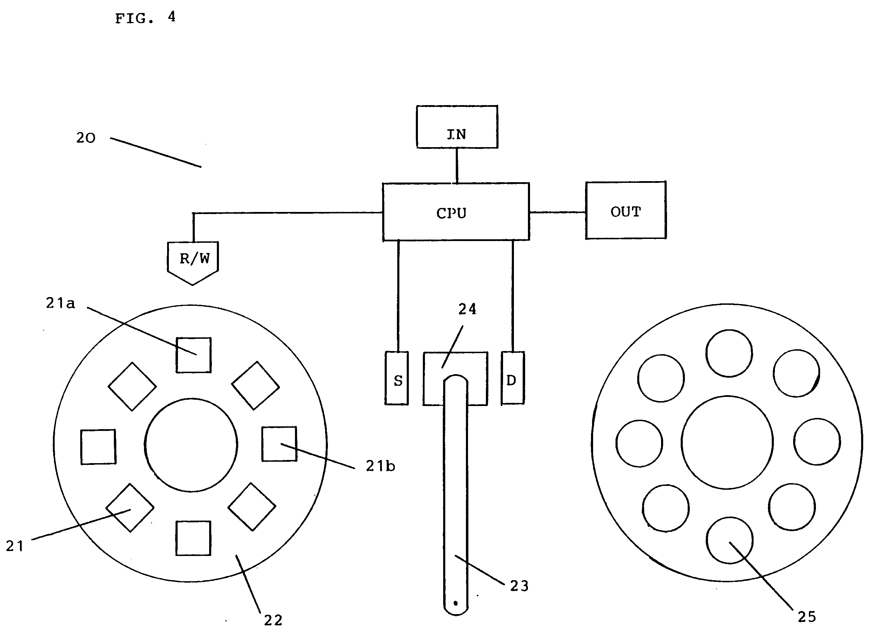

Figur 4 zeigt schematisch den Aufbau eines Analysesystems (20) unter Verwendung von Reagenzgefäßen, die mit Datenträgern hoher Informationsdichte versehen sind. Reagenzgefäße (21), auf die kontaktlose Chipkarten aufgebracht sind, befinden sich auf einem drehbaren Teller (22).

Eine Schreib-/Lesevorrichtung (R/W) befindet sich gegenüber der Außenkante des drehbaren Tellers (22). Die Schreib-/Lesevorrichtung (R/W) steuert jeweils die kontaktlose Chipkarte des ihr gegenüberliegenden Reagenzgefäßes (21a) an. Eine Rechenvorrichtung (CPU) kann aus den Daten, die ihr durch die Schreib-/Lesevorrichtung (R/W) übermittelt wurden und Daten, die von einem Anwender über eine Tastatur (IN) eingegeben wurden, die Analyse steuern. Zur Durchführung einer bestimmten Analyse wird ein Reagenzgefäß (21b) in die Entnahmeposition gebracht. Der Pipettierarm (23) pipettiert Reagenzflüssigkeit aus dem Reagenzgefäß (21b) und gibt sie in ein Reaktionsgefäß (24). Daraufhin pipettiert der Pipettierarm (23) Probenflüssigkeit aus einem Probengefäß (25) und gibt sie in das Reaktionsgefäß (24). Zur Analyse der Probenflüssigkeit setzt die Rechenvorrichtung (CPU) eine Lichtquelle (S) in Gang, die das Reaktionsgefäß (24) durchstrahlt. Der Detektor (D) mißt die durch das Reaktionsgefäß (24) hindurchtretende Strahlung und gibt das Meßsignal an die Rechenvorrichtung (CPU) weiter. Die Rechenvorrichtung ermittelt das Analyseergebnis und stellt es auf einem Display (OUT) dar.

**Bezugszeichenliste**

(1) Reagenzgefäß
(2) Zweidimensionaler Strichcode
(5) Reagenzgefäß
(6) Sende-/Empfangsspule einer kontaktlosen Chipkarte
(7) Chip
(10) Reagenzgefäß
(11) Eingekapselte kontaktlose Chipkarte
(12) Gefäßöffnung
(20) Analysesystem
(21) Reagenzgefäß
(21a) Reagenzgefäß in Schreib-/Leseposition
(21b) Reagenzgefäß in Position zur Pipettierung
(22) Drehteller
(23) Pipettierarm
(24) Reaktionsgefäß
(25) Probengefäß
R/W: Schreib-/Lesevorrichtung
CPU: Rechenvorrichtung
IN: Tastatur
OUT: Display
S: Lichtquelle
D: Detektor

**Patentansprüche**

1. Verfahren zur Analyse von Probenflüssigkeiten mit den Schritten
   - kontaktloses Einlesen von Daten aus einem Datenträger hoher Informationsdichte, der sich an einem Gefäß befindet, das eine Reagenzlösung enthält
   - Durchführung einer Analyse unter Verwendung der eingelesenen Daten, die zur Steuerung der Analyse beitragen.

2. Verfahren nach Anspruch 1 unter Verwendung der in dem Gefäß befindlichen Reagenzlösung, bei dem die Daten, die sich an dem Gefäß befinden, das eine Reagenzlösung enthält, im Verlauf der Analyse zumindest zum Teil verändert werden.

3. Verfahren zur Analyse von Probenflüssigkeiten nach Anspruch 1, bei dem eingelesene Daten die Kalibrierung eines Analysengerätes steuern.

4. Verfahren zur Analyse von Probenflüssigkeiten nach Anspruch 2, bei dem die Daten hoher Informationsdichte durch eine Schreibvorrichtung verändert werden.

5. Verfahren zur Analyse von Probenflüssigkeiten nach Anspruch 1, bei dem als Datenträger hoher Informationsdichte Zweidimensionale Strichcodes oder kontaktlose Chipkarten verwendet werden.

6. Verfahren zur Analyse von Probenflüssigkeiten nach Anspruch 1, bei dem teilweise oder vollständig entleerte Reagenzgefäße mit den an ihnen angebrachten Daten verworfen werden.

7. Verfahren zur Analyse von Probenflüssigkeiten nach Anspruch 1, bei dem Reagenzgefäßen mit hoher Informationsdichte Reagenzgefäße mit Strichcodes zugeordnet werden.

8. Verfahren zur Herstellung eines mit einem Codeträger versehenen Reagenzgefäßes mit den Schritten
   - Befüllung des Gefäßes mit einer Reagenzlösung
   - Anbringen von Daten mit hoher Informationsdichte an dem Gefäß.

9. Verfahren zur Herstellung von mit Codeträgern versehenen Reagenzgefäßen nach Anspruch 8, bei dem die Daten hoher Informationsdichte vor der Befüllung des Gefäßes an dem Gefäß angebracht werden.

**10.** Verfahren zur Herstellung von mit Codeträgern versehenen Reagenzgefäßen nach Anspruch 8, bei dem die Daten hoher Informationsdichte in Form eines zweidimensionalen Barcodes oder einer kontaktlosen Chipkarte auf das Gefäß aufgebracht werden.

**11.** Verfahren zur Herstellung von Reagenzgefäßen nach AnSpruch 8, bei dem die Daten angeklebt, eingeschweißt oder angeklemmt werden.

**12.** System zur Analyse von Probenflüssigkeiten enthaltend
- eine Analysevorrichtung, die Vorrichtungen zur Aufnahme von Probengefäßen und von Reagenzgefäßen, eine Vorrichtung zur Pipettierung, eine Meßvorrichtung und eine Auswertevorrichtung besitzt
- ein optisches oder elektromagnetisches Lesegerät für Daten hoher Informationsdichte
- ein oder mehrere Gefäße, enthaltend Reagenzlösung, auf denen Daten hoher Informationsdichte gespeichert sind, die zur Steuerung der Analysevorrichtung dienen.

**13.** System nach Anspruch 12, das gespeicherte Daten enthält, die zusammen mit eingelesenen Daten die Kalibrierung des Systems steuern.

FIG. 1

FIG. 2

FIG. 3

FIG. 4